# EUROPÄISCHE PATENTSCHRIFT

(11) **EP 2 111 514 B1**
(45) Veröffentlichungstag und Bekanntmachung des Hinweises auf die Patenterteilung: **22.12.2010**
(21) Anmeldenummer: 07822566.1
(22) Anmeldetag: 14.11.2007
(51) Int. Cl.: F16H 3/00

(54) **DOPPELKUPPLUNGSGETRIEBE EINES KRAFTFAHRZEUGS**
DOUBLE CLUTCH TRANSMISSION OF A MOTOR VEHICLE
BOÎTE DE VITESSES À DOUBLE EMBRAYAGE D'UN VÉHICULE AUTOMOBILE

(30) Priorität: 17.11.2006 DE 102006054271
(43) Veröffentlichungstag der Anmeldung: 28.10.2009
(73) Patentinhaber: ZF Friedrichshafen AG, 88038 Friedrichshafen (DE)
(72) Erfinder: WAFZIG, Jürgen, 88097 Eriskirch (DE); GUMPOLTSBERGER, Gerhard, 88045 Friedrichshafen (DE)
(86) Internationale Anmeldenummer: PCT/EP2007/062298
(87) Internationale Veröffentlichungsnummer: WO 2008/058974

(56) Entgegenhaltungen:
- EP-A- 1 388 685
- EP-A- 1 845 289
- WO-A-89/04432
- DE-A1- 10 054 318
- DE-A1- 10 153 014
- DE-A1- 10 305 241
- DE-A1- 10 316 070
- DE-A1- 19 821 164
- DE-A1-102004 001 278
- GB-A- 2 081 825
- US-A1- 2004 149 061
- US-A1- 2005 081 661
- US-A1- 2005 115 344
- US-A1- 2005 130 795

## Beschreibung

Die Erfindung betrifft ein Doppelkupplungsgetriebe eines Kraffahrzeugs, mit sieben Vorwärtsgängen und einem Rückwärtsgang, mit zwei koaxial zueinander angeordneten und über jeweils eine separate Kupplung mit der Antriebswelle eines Antriebsmotors verbindbaren Eingangswellen, mit zwei achsparallel neben den Eingangswellen angeordneten und über jeweils ein Abtriebsrad mit einem gemeinsamen Abtriebselement in Triebverbindung stehenden Vorgelegewellen, und mit mehreren jeweils mindestens zwei miteinander in Verzahnungseingriff stehende Zahnräder, darunter ein Festrad und ein Losrad, umfassenden Gangradsätzen, deren Festräder auf die beiden Eingangswellen verteilt und jeweils drehfest auf der zugeordneten Eingangswelle angeordnet sind, und deren Losräder auf die beiden Vorgelegewellen verteilt und jeweils drehbar auf der zugeordneten Vorgelegewelle gelagert sowie durch eine zugeordnete Gangkupplung drehfest mit dieser verbindbar sind, wobei jede der beiden Eingangswellen mindestens ein Festrad aufweist, das zwei Gangradsätzen zugeordnet ist und mit auf verschiedenen Vorgelegewellen angeordneten Losrädern in Verzahnungseingriff ist.

Doppelkupplungsgetriebe sind in unterschiedlichen Ausführungen seit längerem bekannt. Um ein Doppelkupplungsgetriebe insbesondere in axialer Richtung besonders kompakt ausbilden zu können, sind zwei Vorgelegewellen vorgesehen, die mit den beiden koaxial angeordneten Eingangswellen eine V-förmige Anordnung bilden und über jeweils ein Abtriebsrad mit einem gemeinsamen Abtriebselement, wie dem Antriebsrad einer Abtriebswelle oder dem Antriebsrad eines Achs- oder Zentraldifferenzials, in Triebverbindung stehen. Bei einem derartigen Doppelkupplungsgetriebe, welches besonders für den Quereinbau einer aus einem Antriebsmotor und dem Getriebe bestehenden Antriebseinheit geeignet ist, sind die Gangradsätze der Gänge über die Anordnung ihrer Festräder und Losräder auf die beiden Eingangswellen und auf den beiden Vorgelegewellen verteilt, wobei die Losräder zum leichteren Aufbau und zur leichteren Zugänglichkeit der zugeordneten Gangkupplungen bevorzugt auf den Vorgelegewellen angeordnet sind. Die Zahnräder der Gangradsätze sind zweckmäßig jeweils paarweise in einer gemeinsamen radialen Radsatzebene angeordnet, wobei mindestens ein Festrad pro Eingangswelle durch einen Verzahnungseingriff mit zwei auf verschiedenen Vorgelegewellen angeordneten Losrädern zugleich den Gangradsätzen von zwei Gängen zugeordnet sein kann.

Bei einem derartigen Doppelkupplungsgetriebe besteht ein grundsätzlicher Bedarf, für verschiedene Applikationen, also für unterschiedliche Kraftfahrzeugmodelle und für unterschiedliche Motorvarianten, Getriebeausführungen mit jeweils unterschiedlicher Anzahl von Gängen anzubieten, die auf möglichst einfache und kostengünstige Weise aus einer Basisausführung ableitbar sind. Dabei sollten die verschiedenen Getriebeausführungsformen zur Erzielung geringer Herstellungskosten und günstiger Montagebedingungen eine möglichst hohe Anzahl von Gleichteilen und geringe konstruktive und montagetechnische Unterschiede aufweisen.

Ein erstes Doppelkupplungsgetriebe mit sechs Vorwärtsgängen und einem Rückwärtsgang ist aus der GB 2 081 825 A gemäß der dortigen Fig. 2 bekannt. Bei diesem bekannten Doppelkupplungsgetriebe sind die beiden Eingangswellen als Hohlwellen ausgebildet und axial benachbart zueinander angeordnet. Die beiden, jeweils mit einer der beiden Eingangswellen in Verbindung stehenden Kupplungen sind an axial entgegengesetzten Außenseiten des Doppelkupplungsgetriebes angeordnet, wobei der Kupplungskorb der antriebsseitigen ersten Kupplung mit der Antriebswelle eines Antriebsmotors und die antriebsfeme zweite Kupplung über eine innerhalb der beiden Eingangswellen angeordnete Zentralwelle mit dem Kupplungskorb der ersten Kupplung und mit der Antriebswelle verbunden ist. Die Festräder des ersten Gangs und des dritten Gangs sind drehfest auf der antriebsseitigen ersten Eingangswelle angeordnet. Die Losräder des ersten Gangs und des dritten Gangs sind drehbar auf einer ersten Vorgelegewelle gelagert und mit dieser mittels zugeordneter, in einem gemeinsamen Schaltpaket zusammengefasster Gangkupplungen drehfest verbindbar. Die Festräder des vierten Gangs und des zweiten Gangs sind drehfest auf der antriebsfemen zweiten Eingangswelle angeordnet. Die Losräder des vierten Gangs und des zweiten Gangs sind drehbar auf der ersten Vorgelegewelle gelagert und mit dieser mittels zugeordneter, in einem gemeinsamen Schaltpaket zusammengefasster Gangkupplungen drehfest verbindbar.

Das Festrad des ersten Gangs bildet zugleich das Festrad des Rückwärtsgangs und steht zur Drehrichtungsumkehr über ein Zwischenrad mit dem Losrad des Rückwärtsgangs in Triebverbindung. Das Festrad des dritten Gangs bildet zugleich das Festrad des fünften Gangs und steht mit dem Losrad des fünften Gangs in Verzahnungseingriff. Die Losräder des Rückwärtsgangs und des fünften Gangs sind drehbar auf einer zweiten Vorgelegewelle gelagert und mit dieser mittels zugeordneter, in einem gemeinsamen Schaltpaket zusammengefasster Gangkupplungen drehfest verbindbar. Das Festrad des vierten Gangs bildet zugleich das Festrad des sechsten Gangs und steht mit dem Losrad des sechsten Gangs in Verzahnungseingriff. Das Losrad des sechsten Gangs ist drehbar auf der zweiten Vorgelegewelle gelagert und mit dieser mittels einer zugeordneten, ein einfachwirksames Schaltpaket bildenden Gangkupplung drehfest verbindbar.

Zur Reduzierung der Anzahl unterschiedlicher Bauteile sind die Losräder des dritten Gangs und des fünften Gangs sowie die Losräder des vierten Gangs und des sechsten Gangs jeweils identisch ausgebildet. Die unterschiedlichen Gangübersetzungen ergeben sich jeweils durch unterschiedlich große bzw. eine unterschiedliche Zähnezahl aufweisende Abtriebsräder der beiden Vorgelegewellen. Zwar kann das bekannte Doppelkupplungsgetriebe durch Weglassen des Losrades und der zugeordneten Gangkupplung des sechsten Gangs auf einfache Weise um einen Gang reduziert werden. Eine Erweiterung um einen Gang erfordert jedoch neben der Verlängerung der zweiten Vorgelegewelle und einer Erweiterung des einfachwirksamen Schaltpaketes des sechsten Gangs auf ein doppeltwirksames Schaltpaket eine völlig andere Anordnung der Gangradsätze, da eine Anordnung des Gangradsatzes des siebten Gangs in der Radsatzebene des Gangradsatzes des zweiten Gangs in Verbindung mit einem Verzahnungseingriff des Losrades des siebten Gangs mit dem Festrad des zweiten Gangs nicht möglich ist. Im Übrigen ist die axial beidseitige Anordnung der beiden Kupplungen im Hinblick auf eine geringstmögliche axiale Baulänge ungünstig.

Ein zweites Doppelkupplungsgetriebe mit sechs Vorwärtsgängen und einem Rückwärtsgang ist identisch in der DE 198 21 164 A1 und der DE 101 53 014 A1 beschrieben. Bei diesem bekannten Doppelkupplungsgetriebe ist eine erste Eingangswelle in einer koaxial zentral innerhalb einer als Hohlwelle ausgebildeten zweiten Eingangswelle angeordnet. Die beiden, jeweils mit einer der beiden Eingangswellen in Verbindung stehenden Kupplungen sind axial antriebsseitig angeordnet, wobei ein gemeinsamer Kupplungskorb mit der Antriebswelle eines Antriebsmotors verbunden ist. Die Festräder des ersten Gangs und des dritten Gangs sind drehfest auf einem antriebsfernen Abschnitt der ersten Eingangswelle angeordnet. Die Losräder des ersten Gangs und des dritten Gangs sind drehbar auf einer ersten Vorgelegewelle gelagert und mit dieser mittels zugeordneter, in einem gemeinsamen Schaltpaket zusammengefasster Gangkupplungen drehfest verbindbar. Die Festräder des vierten Gangs und des zweiten Gangs sind drehfest auf der zweiten Eingangswelle angeordnet. Die Losräder des vierten Gangs und des zweiten Gangs sind drehbar auf der ersten Vorgelegewelle gelagert und mit dieser mittels zugeordneter, in einem gemeinsamen Schaltpaket zusammengefasster Gangkupplungen drehfest verbindbar.

Das Festrad des ersten Gangs bildet bei dem Getriebe gemäß der DE 101 53 014 A1 zugleich das Festrad des Rückwärtsgangs und steht zur Drehrichtungsumkehr über ein Antriebsrad und ein Abtriebsrad einer Zwischenwelle mit dem Losrad des Rückwärtsgangs in Triebverbindung. Das Festrad des vierten Gangs bildet zugleich das Festrad des sechsten Gangs und ist mit dem Losrad des sechsten Gangs in Verzahnungseingriff.

Die Losräder des Rückwärtsgangs und des sechsten Gangs sind drehbar auf einer zweiten Vorgelegewelle gelagert und mit dieser mittels zugeordneter, in einem gemeinsamen Schaltpaket zusammengefasster Gangkupplungen drehfest verbindbar. Der Gangradsatz des fünften Gangs ist auf der axial antriebsfernen Außenseite in einer eigenen Radsatzebene angeordnet. Das Festrad des fünften Gangs ist drehfest auf der ersten Eingangswelle angeordnet. Das Losrad des fünften Gangs ist drehbar auf der zweiten Vorgelegewelle gelagert und mit dieser mittels einer zugeordneten, ein einfachwirksames Schaltpaket bildenden Gangkupplung drehfest verbindbar.

Zwar kann auch dieses bekannte Doppelkupplungsgetriebe durch Weglassen des Losrades und der zugeordneten Gangkupplung des sechsten Gangs auf einfache Weise um einen Gang reduziert werden. Eine Erweiterung um einen siebten Gang erfordert jedoch eine völlig andere Anordnung der Gangradsätze, da eine einfache Ergänzung um einen Gangradsatz und eine Gangkupplung eines siebten Gangs ohne weitergehende Änderungen und Umstellungen mehrerer Gangradsätze nicht möglich ist. Im Übrigen ist die zusätzliche Radsatzebene für den Gangradsatz des fünften Gangs im Hinblick auf eine geringstmögliche axiale Baulänge ungünstig.

Ein weiteres Doppelkupplungsgetriebe mit sechs Vorwärtsgängen und einem Rückwärtsgang ist aus der DE 103 05 241 A1 bekannt. Bei diesem Doppelkupplungsgetriebe ist eine erste Eingangswelle koaxial innerhalb einer als Hohlwelle ausgebildeten zweiten Eingangswelle angeordnet. Die beiden, jeweils mit einer der beiden Eingangswellen in Verbindung stehenden Kupplungen sind axial antriebsseitig angeordnet und stehen über einen gemeinsamen Kupplungskorb mit der Antriebswelle eines Antriebsmotors in Verbindung. Die Festräder des ersten Gangs und des dritten Gangs sind drehfest auf einem antriebsfernen Abschnitt der ersten, zentralen Eingangswelle angeordnet. Die Losräder des ersten Gangs und des dritten Gangs sind drehbar auf einer ersten Vorgelegewelle gelagert und mit dieser mittels zugeordneter, in einem gemeinsamen Schaltpaket zusammengefasster Gangkupplungen drehfest verbindbar.

Das Festrad des vierten Gangs ist drehfest auf der zweiten, hohlen Eingangswelle angeordnet. Die Losräder des vierten Gangs und des Rückwärtsgangs sind drehbar auf der ersten Vorgelegewelle gelagert und mit dieser mittels zugeordneter, in einem gemeinsamen Schaltpaket zusammengefasster Gangkupplungen drehfest verbindbar. Das Festrad des vierten Gangs bildet zugleich das Festrad des sechsten Gangs. Axial antriebsseitig benachbart dazu ist ein Festrad des zweiten Gangs drehfest auf der zweiten Eingangswelle angeordnet. Die Losräder des sechsten Gangs und des zweiten Gangs sind drehbar auf einer zweiten Vorgelegewelle gelagert und mit dieser mittels zugeordneter, in einem gemeinsamen Schaltpaket zusammengefasster Gangkupplungen drehfest verbindbar.

Das Losrad des Rückwärtsgangs steht zur Drehrichtungsumkehr mit dem Losrad des zweiten Gangs in Verzahnungseingriff und wird somit ebenfalls über das Festrad des zweiten Gangs von der zweiten Eingangswelle angetrieben. Das Festrad des dritten Gangs bildet zugleich das Festrad des fünften Gangs. Das Losrad des fünften Gangs ist drehbar auf der zweiten Vorgelegewelle gelagert und mit dieser mittels einer zugeordneten, ein einfachwirksames Schaltpaket bildenden Gangkupplung drehfest verbindbar.

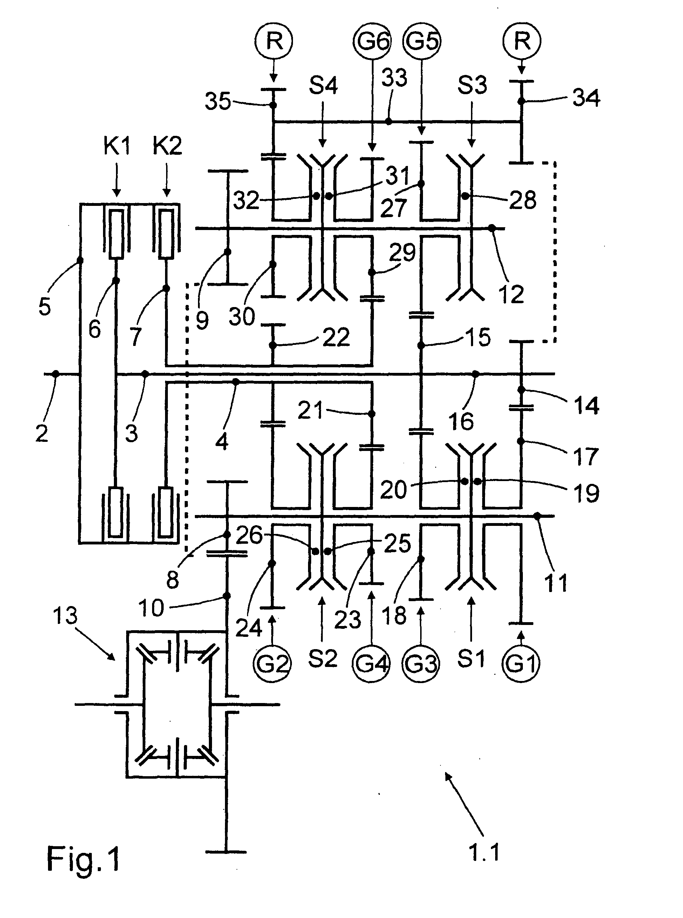

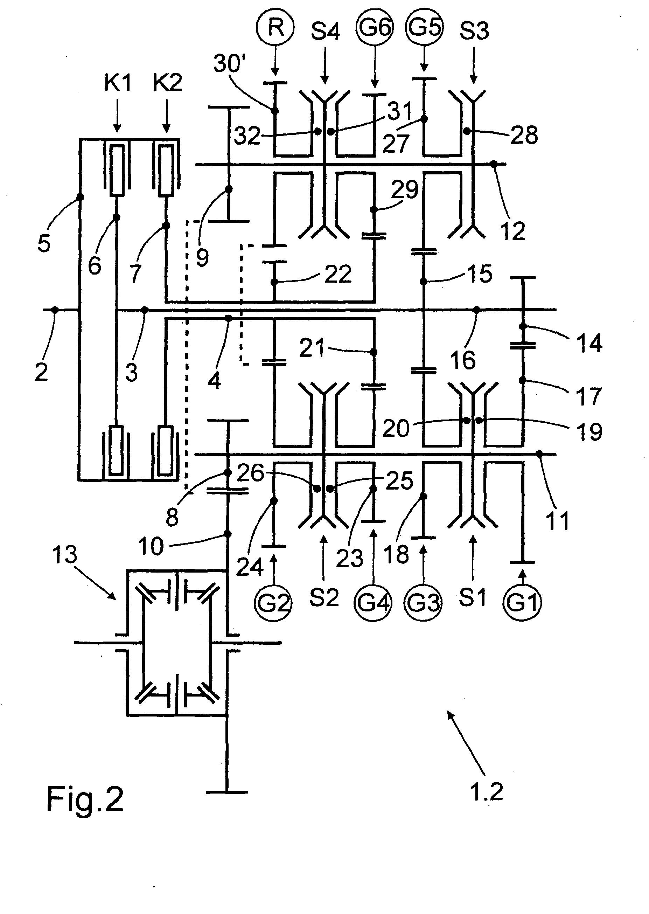

Zwar kann dieses bekannte Doppelkupplungsgetriebe durch Weglassen des Losrades und der zugeordneten Gangkupplung des sechsten Gangs auf einfache Weise um einen Gang reduziert werden. Wie aber insbesondere aus der dortigen Fig.2 hervorgeht, erfordert eine Erweiterung um einen siebten Gang jedoch eine grundlegend andere Anordnung der Gangradsätze und ist daher mit einem ungünstig hohen Änderungsaufwand verbunden. So ist in der siebengängigen Ausführung dieses bekannten Doppelkupplungsgetriebes nach der dortigen Fig. 2 im Vergleich zu der sechsgängigen Ausführung nach der dortigen Fig. 1 der Gangradsatz des zusätzlichen siebten Gangs anstelle des Gangradsatzes des fünften Gangs angeordnet, der Gangradsatz des fünften Gangs nunmehr anstelle des Gangradsatzes des dritten Gangs angeordnet, und der Gangradsatz des dritten Gangs auf der axial antriebsfemen Außenseite in einer eigenen Radsatzebene angeordnet. Das Festrad des dritten Gangs ist nunmehr drehfest auf der ersten Eingangswelle angeordnet, und das Losrad des fünften Gangs ist bei dieser Ausführung drehbar auf der zweiten Vorgelegewelle gelagert sowie mit dieser mittels einer zugeordneten, mit der Gangkupplung des siebten Gangs in einem gemeinsamen Schaltpaket zusammengefassten Gangkupplung drehfest verbindbar.

Die Dokumente DE 103 16 070 A1, US 2005/0115344 A1, WO 89/04432 und EP 1 388 685 A2 zeigen jeweils Doppelkupplungsgetriebe mit mindestens zwei Vorgelegewellen. Schließlich zeigt das Dokument DE 10 2004 001 278 A1, welches alle Merkmale des Oberbegriffs des Anspruchs 1 offenbart, ein Doppelkupplungsgetriebe eines Kraftfahrzeugs mit sieben Vorwärtsgängen und einem Rückwärtsgang bei dem die Festräder des ersten Gangs und des dritten Gangs drehfest auf einem antriebsfernen Abschnitt einer als Zentralwelle ausgebildeten ersten Eingangswelle angeordnet sind, die Festräder des vierten Gangs und des zweiten Gangs drehfest auf einer als Hohlwelle ausgebildeten zweiten Eingangswelle angeordnet sind und das Festrad des vierten Gangs zugleich das Festrad des sechsten Gangs bildet und mit dem Losrad des sechsten Gangs in Verzahnungseingriff ist.

Vor diesem Hintergrund liegt der vorliegenden Erfindung die Aufgabe zugrunde, ein Doppelkupplungsgetriebe mit sieben Vorwärtsgängen und einem Rückwärtsgang vorzuschlagen, welches einen möglichst einfachen und Platz sparenden Aufbau aufweist.

Diese Aufgabe wird gelöst durch ein Doppelkupplungsgetriebe für ein Kraftfahrzeug gemäß den Merkmalen des Anspruchs 1, mit sieben Vorwärtsgängen und einem Ruckwärtsgang, mit zwei koaxial zueinander angeordneten und über jeweils eine separate Kupplung mit der Antriebswelle eines Antriebsmotors verbindbaren Eingangswellen, mit zwei achsparallel neben den Eingangswellen angeordneten und über jeweils ein Abtriebsrad mit einem gemeinsamen Abtriebselement in Triebverbindung stehenden Vorgelegewellen, und mit mehreren jeweils mindestens zwei miteinander in Verzahnungseingriff stehende Zahnräder, darunter ein Festrad und ein Losrad, umfassenden Gangradsätzen, deren Festräder auf die beiden Eingangswellen verteilt und jeweils drehfest auf der zugeordneten Eingangswelle angeordnet sind, und deren Losräder auf die beiden Vorgelegewellen verteilt und jeweils drehbar auf der zugeordneten Vorgelegewelle gelagert sowie durch eine zugeordnete Gangkupplung drehfest mit dieser verbindbar sind, wobei jede der beiden Eingangswellen mindestens ein Festrad aufweist, welches zwei Gangradsätzen zugeordnet und mit auf verschiedenen Vorgelegewellen angeordneten Losrädern in Verzahnungseingriff ist.

Dieses Doppelkupplungsgetriebe ist zudem **dadurch gekennzeichnet, dass** in einer Basisausführung mit sechs Vorwärtsgängen und einem Rückwärtsgang die erste Eingangswelle koaxial zentral innerhalb der als Hohlwelle ausgebildeten zweiten Eingangswelle angeordnet ist, dass die beiden Kupplungen axial antriebsseitig angeordnet und über einen gemeinsamen Kupplungskorb mit der Antriebswelle des Antriebsmotors verbunden sind, dass die Festräder des ersten Gangs und des dritten Gangs drehfest auf einem antriebsfernen Abschnitt der ersten Eingangswelle angeordnet sind, dass die Losräder des ersten Gangs und des dritten Gangs drehbar auf der ersten Vorgelegewelle gelagert und mit dieser mittels zugeordneter, in einem gemeinsamen Schaltpaket zusammengefasster Gangkupplungen wechselweise drehfest verbindbar sind, dass die Festräder des vierten Gangs und des zweiten Gangs drehfest auf der zweiten Eingangswelle angeordnet sind, dass die Losräder des vierten Gangs und des zweiten Gangs drehbar auf der ersten Vorgelegewelle gelagert und mit dieser mittels zugeordneter, in einem gemeinsamen Schaltpaket zusammengefasster Gangkupplungen wechselweise drehfest verbindbar sind, dass das Festrad des dritten Gangs zugleich das Festrad des fünften Gangs bildet und mit dem Losrad des fünften Gangs in Verzahnungseingriff ist, dass das Losrad des fünften Gangs drehbar auf der zweiten Vorgelegewelle gelagert und mit dieser über eine auf der axial antriebsfernen Außenseite angeordnete Gangkupplung drehfest verbindbar ist, dass das Festrad des vierten Gangs zugleich das Festrad des sechsten Gangs bildet und mit dem Losrad des sechsten Gangs in Verzahnungseingriff ist, dass das Losrad des Rückwärtsgangs in der Radsatzebene des zweiten Gangs angeordnet ist, und dass die Losräder des sechsten Gangs und des Rückwärtsgangs drehbar auf der zweiten Vorgelegewelle gelagert sowie mit dieser mittels zugeordneter, in einem gemeinsamen Schaltpaket zusammengefasster Gangkupplungen wechselweise drehfest verbindbar sind.

Der Aufbau dieses erfindungsgemäßen Doppelkupplungsgetriebes ist ähnlich dem Aufbau der aus der DE 198 21 164 A1 und der DE 101 53 014 A1 bekannten Doppelkupplungsgetriebe. Es gibt jedoch wesentliche Unterschiede, die darin bestehen, dass bei dem Doppelkupplungsgetriebe gemäß der Erfindung der Gangradsatz des fünften Gangs in der Radsatzebene des dritten Gangs angeordnet ist, dass das Festrad des dritten Gangs zugleich das Festrad des fünften Gangs bildet und mit dem Losrad des fünften Gangs in Verzahnungseingriff ist, und dass die Gangkupplung, über die das drehbar auf der zweiten Vorgelegewelle gelagerte Losrad des fünften Gangs mit dieser verbindbar ist, auf der axial antriebsfernen Außenseite angeordnet ist.

In dem erfindungsgemäßen Doppelkupplungsgetriebe kann die eine Drehrichtungsumkehr erfordernde triebtechnische Anbindung des Losrades des Rückwärtsgangs derart ausgeführt sein, dass eine achsparallele Zwischenwelle mit einem Antriebsrad und einem Abtriebsrad vorgesehen ist, deren Antriebsrad mit dem Festrad des ersten Gangs in Verzahnungseingriff steht, und deren Abtriebsrad mit dem Losrad des Rückwärtsgangs in Verzahnungseingriff ist. Hierdurch befindet sich das Losrad des Rückwärtsgangs unter Umkehrung seiner Drehrichtung mit der ersten Eingangswelle in Triebverbindung.

Alternativ dazu kann das Losrad des Rückwärtsgangs in Verbindung mit einer Drehrichtungsumkehr auch mit der zweiten Eingangswelle in Triebverbindung stehen, indem das Losrad des Rückwärtsgangs mit dem Losrad des zweiten Gangs in Verzahnungseingriff ist. Hierbei wird das Losrad des zweiten Gangs als Zwischenrad genutzt und bewirkt die Drehrichtungsumkehr des Losrades des Rückwärtsgangs in Bezug zu der zweiten Eingangswelle und dem mit dieser drehfest verbundenen Festrad des zweiten Gangs. Bei dieser Ausführungsform wird die Verwendung einer Zwischenwelle vermieden und somit Bauraum und Bauteilkosten eingespart. Zur Erzielung einer ähnlich hohen Übersetzung des Rückwärtsgangs wie bei der zuvor beschriebenen Anbindung an den Gangradsatz des ersten Gangs ist jedoch eine Vergrößerung des Losrades bzw. eine Ausführung des Losrades mit einer höheren Zähnezahl erforderlich.

Eine weitere Möglichkeit zur triebtechnischen Anbindung des Rückwärtsgangs an die zweite Eingangswelle besteht darin, dass das Losrad des Rückwärtsgangs über ein mit diesem und dem Festrad des zweiten Gangs in Verzahnungseingriff stehenden separaten Zwischenrad mit dem Festrad des zweiten Gangs in Triebverbindung steht. Dabei bewirkt das Zwischenrad, wie bei der zuvor beschriebenen Ausführungsvariante das Losrad des zweiten Gangs, die Drehrichtungsumkehr des Losrades des Rückwärtsgangs in Bezug zu der zweiten Eingangswelle und dem mit dieser drehfest verbundenen Festrad des zweiten Gangs.

Das erfindungsgemäße Doppelkupplungsgetriebe mit sieben Vorwärtsgängen und einem Rückwärtsgang, kann auf einfache Weise durch das Anordnen des Gangradsatzes des siebten Gangs in einer axial antriebsfern außenliegenden Radsatzebene geschaffen werden, wobei das Festrad des siebten Gangs drehfest auf der ersten Eingangswelle angeordnet ist, das Losrad des siebten Gangs drehbar auf der zweiten Vorgelegewelle gelagert und mit dieser mittels einer mit der Gangkupplung des fünften Gangs in einem gemeinsamen Schaltpaket zusammengefassten Gangkupplung drehfest verbindbar ist.

Mit dem Doppelkupplungsgetriebe gemäß der Erfindung ist somit ein Getriebe geschaffen, welches im Gegensatz zu bekannten Ausführungen ähnlicher Doppelkupplungsgetriebe besonders kompakt aufgebaut ist.

Zur Verdeutlichung der Erfindung ist der Beschreibung eine Zeichnung mit Ausführungsbeispielen beigefügt.
In einer schematischen Darstellungsweise zeigt
- Fig. 1: eine nicht erfindungsgemäße erste Variante einer sechsgängi- gen Basisausführung eines Doppelkupp- lungsgetriebes,
- Fig. 2: eine nicht erfindungsgemäße zweite Variante einer sechsgän- gigen Basisausführung eines Doppelkupp- lungsgetriebes,
- Fig. 3: eine nicht erfindungsgemäße dritte Variante einer sechsgängi- gen Basisausführung eines Doppelkupp- lungsgetriebes,
- Fig. 4: eine nicht erfindungsgemäße aus der Basisausführung gemäß Fig. 1 abgeleitete erste Variante einer fünfgängigen Ausfüh- rungsform eines Doppelkupplungsgetriebes,
- Fig. 5: eine nicht erfindungsgemäße aus der Basisausführung gemäß Fig. 2 abgeleitete zweite Variante einer fünfgängigen Ausfüh- rung eines Doppelkupplungsgetriebes,
- Fig. 6: eine nicht erfindungsgemäße aus der Basisausführung gemäß Fig. 3 abgeleitete dritte Variante einer fünfgängigen Ausführung eines Doppelkupplungsgetriebes,
- Fig. 7: eine nicht erfindungsgemäße aus einer der Basisausführungen nach den Figuren 1 bis 3 abgeleitete vierte Variante einer fünf- gängigen Ausführung eines Doppelkupp- lungsgetriebes,
- Fig. 8: eine nicht erfindungsgemäße aus einer der Basisausführungen nach den Figuren 1 bis 3 abgeleitete fünfte Variante einer fünf- gängigen Ausführung eines Doppelkupp- lungsgetriebes in einer schematischen Darstellung,
- Fig. 9: eine aus der Basisausführung gemäß Fig. 1 abgeleitete erste erfindungsgemäße Variante einer siebengängigen Ausführung des erfindungsgemäßen Doppelkupplungsgetriebes,
- Fig.10: eine aus der Basisausführung gemäß Fig. 2 abgeleitete zweite erfindungsgemäße Variante einer siebengängigen Ausführung des erfindungsgemäßen Doppelkupplungsgetriebes und
- Fig.11: eine aus der Basisausführung gemäß Fig. 3 abgeleitete dritte erfindungsgemäße Variante einer siebengängigen Ausführung des erfindungsgemäßen Doppelkupplungsgetriebes.

Das nicht erfindungsgemäße Doppelkupplungsgetriebe 1.1 gemäß Fig. 1 stellt eine erste Variante einer sechsgängigen Basisausführung mit sechs Vorwärtsgängen G1, G2, G3, G4, G5, G6 und einem Rückwärtsgang R dar. Das Doppelkupplungsgetriebe weist zwei koaxial zueinander angeordnete und über jeweils eine separate Kupplung K1, K2 mit der Antriebswelle 2 eines Antriebsmotors verbindbare Eingangswellen 3, 4 auf, wobei die erste Eingangswelle 3 zentral innerhalb der als Hohlwelle ausgebildeten zweiten Eingangswelle 4 angeordnet ist. Die beiden Kupplungen K1, K2 sind axial antriebsseitig angeordnet und weisen einen gemeinsamen Kupplungskorb 5 auf, der drehfest mit der Antriebswelle 2 verbunden ist. Die beiden Kupplungen K1, K2 weisen jeweils eine mit dem Kupplungskorb 5 verbindbare Abtriebsscheibe 6, 7 auf, die drehfest mit der zugeordneten ersten bzw. zweiten Eingangswelle 3, 4 verbunden ist.

Das Doppelkupplungsgetriebe 1.1 ist zudem mit zwei achsparallel neben den Eingangswellen 3, 4 angeordneten und über jeweils ein Abtriebsrad 8, 9 mit einem gemeinsamen Abtriebselement 10 in Triebverbindung stehenden Vorgelegewellen 11, 12 versehen. Das Abtriebselement 10 wird vorliegend beispielhaft durch das Tellerrad eines als Kegelraddifferenzial ausgebildeten Achsdifferenzialgetriebes 13 gebildet. Die Gangradsätze der Gänge G1 bis G6 und R umfassen jeweils mindestens ein drehfest auf einer der beiden Eingangswellen 3, 4 angeordnetes Festrad und ein mit diesem in Triebverbindung stehendes, auf einer der beiden Vorgelegewellen 11, 12 drehbar gelagertes, und über eine zugeordnete Gangkupplung mit dieser verbindbares Losrad.

Die Festräder 14, 15 des ersten Gangs G1 und des dritten Gangs G3 sind drehfest auf einem antriebsfemen Abschnitt 16 der ersten Eingangswelle 3 angeordnet. Die Losräder 17, 18 des ersten Gangs G1 und des dritten Gangs G3 sind drehbar auf der ersten Vorgelegewelle 11 gelagert und mit dieser mittels zugeordneter, in einem gemeinsamen Schaltpaket S1 zusammengefasster Gangkupplungen 19, 20 wechselweise drehfest verbindbar.

Die Festräder 21, 22 des vierten Gangs G4 und des zweiten Gangs G2 sind drehfest auf der zweiten Eingangswelle 4 angeordnet. Die Losräder 23, 24 des vierten Gangs G4 und des zweiten Gangs G2 sind drehbar auf der ersten Vorgelegewelle 11 gelagert und mit dieser mittels zugeordneter, in einem gemeinsamen Schaltpaket S2 zusammengefasster Gangkupplungen 25, 26 wechselweise drehfest verbindbar.

Das Festrad 15 des dritten Gangs G3 bildet zugleich das Festrad des fünften Gangs G5 und steht daher mit dem Losrad 27 des fünften Gangs G5 in Verzahnungseingriff. Das Losrad 27 des fünften Gangs G5 ist drehbar auf der zweiten Vorgelegewelle 12 gelagert und mit dieser über eine auf der axial antriebsfemen Außenseite angeordnete und ein einfachwirksames Schaltpaket S3 bildende Gangkupplung 28 drehfest verbindbar. Das Festrad 21 des vierten Gangs G4 bildet zugleich das Festrad des sechsten Gangs G6 und steht daher mit dem Losrad 29 des sechsten Gangs G6 in Verzahnungseingriff.

Das Losrad 30 des Rückwärtsgangs R ist in der Radsatzebene des zweiten Gangs G2 angeordnet. Die Losräder 29, 30 des sechsten Gangs G6 und des Rückwärtsgangs R sind drehbar auf der zweiten Vorgelegewelle 12 gelagert und mit dieser mittels zugeordneter, in einem gemeinsamen Schaltpaket S4 zusammengefasster Gangkupplungen 31, 32 wechselweise drehfest verbindbar. Das Losrad 30 des Rückwärtsgangs R steht in Verbindung mit einer Drehrichtungsumkehr mit der ersten Eingangswelle 3 in Triebverbindung. Hierzu ist eine achsparallele Zwischenwelle 33 mit einem Antriebsrad 34 und einem Abtriebsrad 35 vorgesehen, deren Antriebsrad 34 mit dem Festrad 14 des ersten Gangs G1 in Verzahnungseingriff steht, und deren Abtriebsrad 35 mit dem Losrad 30 des Rückwärtsgangs R in Verzahnungseingriff ist.

Eine nicht erfindungsgemäße zweite Variante der sechsgängigen Basisausführung des Doppelkupplungsgetriebes 1.2 gemäß Fig. 2 ist bis auf die triebtechnische Einbindung des Rückwärtsgangs R identisch mit der ersten Variante nach Fig. 1. Das Losrad 30' des Rückwärtsgangs R steht über eine Drehrichtungsumkehr nunmehr mit der zweiten Eingangswelle 4 in Triebverbindung. Hierzu steht das Losrad 30' des Rückwärtsgangs R jetzt mit dem Losrad 24 des zweiten Gangs G2 in Verzahnungseingriff. Das Losrad 24 des zweiten Gangs G2 hat somit auch die Funktion eines Zwischenrads für den Rückwärtsgang R. Um für den Rückwärtsgang R eine ähnlich hohe Übersetzung wie in der ersten Variante nach Fig.1 zu erreichen, ist im Vergleich dazu das Losrad 30' größter ausgeführt bzw. weist eine höhere Zähnezahl auf.

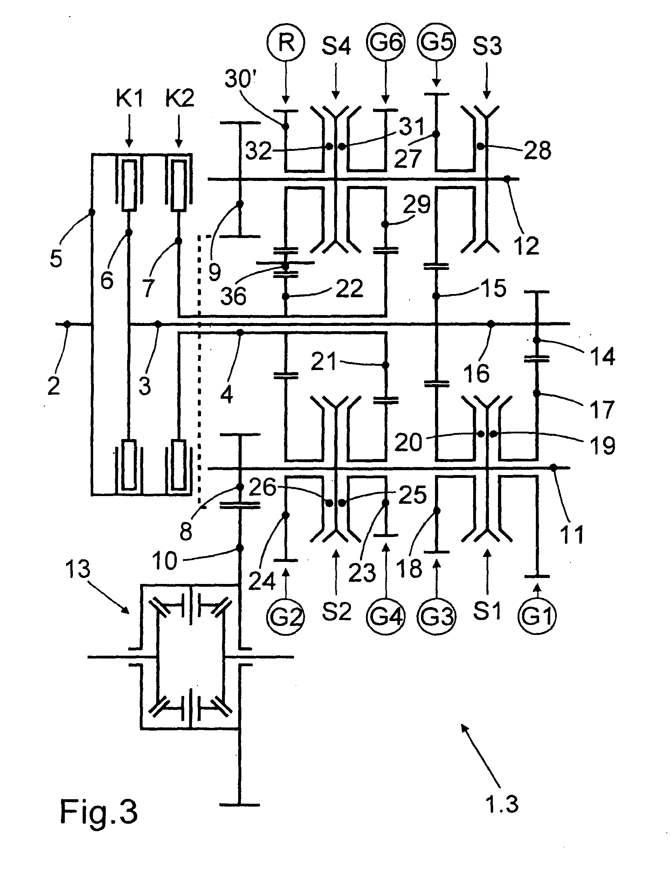

Eine nicht erfindungsgemäße dritte Variante der sechsgängigen Basisausführung des Doppelkupplungsgetriebes 1.3 gemäß Fig. 3 ist bis auf die triebtechnische Einbindung des Rückwärtsgangs R identisch mit der ersten Variante nach Fig. 1 und der zweiten Variante nach Fig. 2. Das Losrad 30' des Rückwärtsgangs R steht über eine Drehrichtungsumkehr wie zuvor mit der zweiten Eingangswelle 4 in Triebverbindung. Hierzu steht das Losrad 30' des Rückwärtsgangs R nunmehr jedoch über ein mit diesem und dem Festrad 22 des zweiten Gangs G2 in Verzahnungseingriff stehenden Zwischenrad 36 mit dem Festrad 22 des zweiten Gangs G2 in Triebverbindung. Die im Vergleich zu der ersten Variante nach Fig. 1 größere Ausbildung des Losrades 30' ist zur realistischen Darstellung des Zwischenrades 36 in Fig. 3 zeichnerisch nicht umgesetzt.

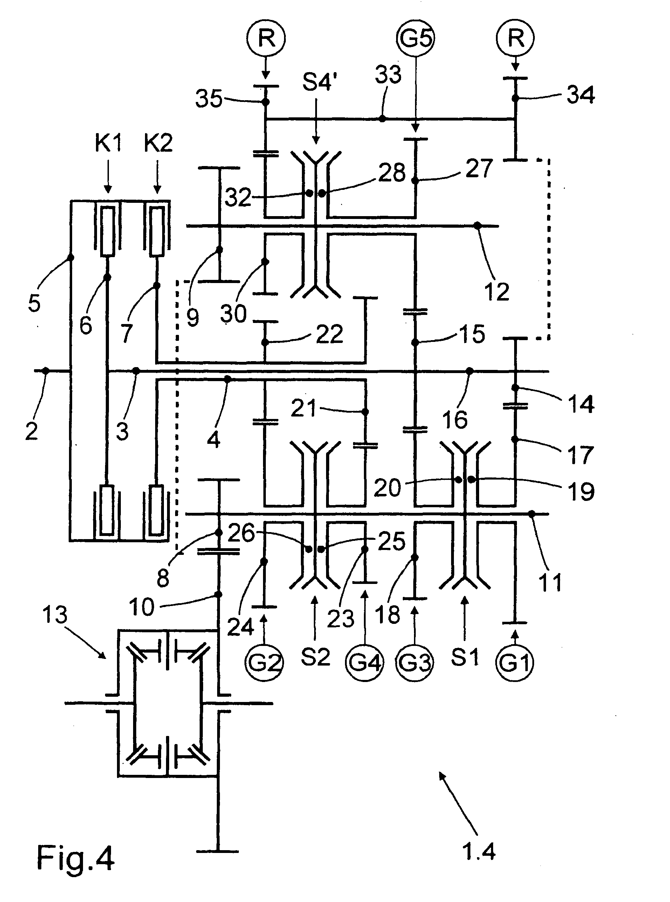

Eine aus der Basisausführung des nicht erfindungsgemäßen Doppelkupplungsgetriebes gemäß Fig. 1 abgeleitete nicht erfindungsgemäße erste Variante einer fünfgängigen Ausführungsform des Doppelkupplungsgetriebes 1.4 nach Fig. 4 wird durch das Weglassen des Losrades 29 des sechsten Gangs G6 und der zugeordneten Gangkupplung 31 gebildet. Die dadurch auf der zweiten Vorgelegewelle 12 verbliebenen Gangkupplungen 28, 32 des fünften Gangs G5 und des Rückwärtsgangs R sind in einem gemeinsamen Schaltpaket S4' zusammengefasst, das in derselben Axialposition angeordnet ist, in der in der sechsgängigen Basisausführung nach Fig. 1 des gemeinsamen Schaltpakets S4 des sechsten Gangs G6 und des Rückwärtsgangs R angeordnet ist. Hierdurch kann nun für die Schaltbetätigung, also für das Ein- und Auslegen des fünften Gangs G5 und des Rückwärtsgangs R dieselbe Betätigungsvorrichtung genutzt, über die in der sechsgängigen Basisausführung nach Fig. 1 die Schaltbetätigung des sechsten Gangs G6 und des Rückwärtsgangs R erfolgt. Das dort für die Schaltbetätigung des fünften Gangs G5 vorgesehene Schaltpaket S3 und die zugeordnete Betätigungsvorrichtung können damit in der fünfgängigen Ausführung komplett eingespart werden.

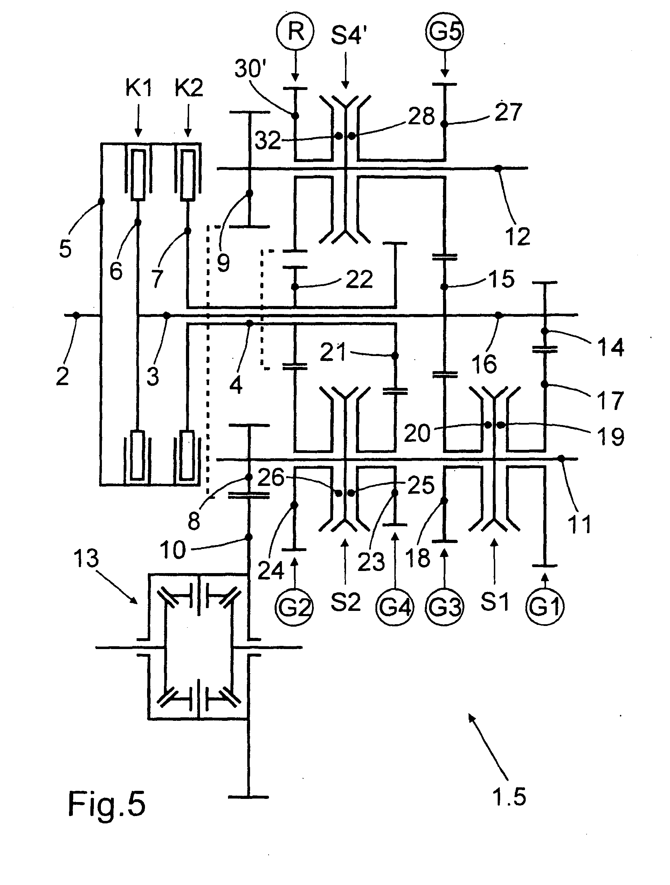

Eine weitgehend identische, jedoch mit der triebtechnischen Anbindung des Rückwärtsgangs R gemäß Fig. 2 versehene nicht erfindungsgemäße zweite Variante der fünfgängigen Ausführung des Doppelkupplungsgetriebes 1.5 ist in Fig. 5 abgebildet.

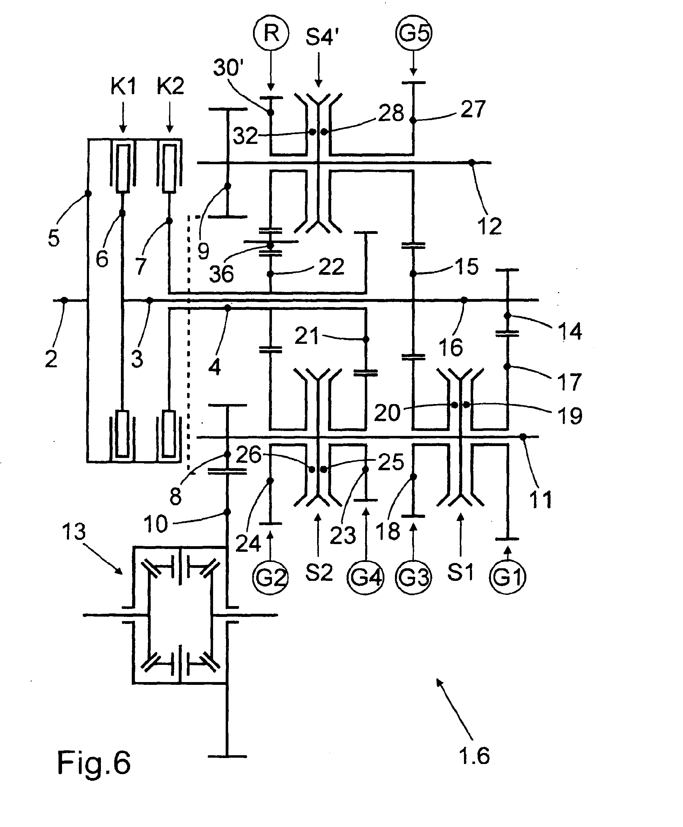

Eine weitgehend identische, jedoch mit der triebtechnischen Anbindung des Rückwärtsgangs Nach Fig. 3 versehene nicht erfindungsgemäße dritte Variante der fünfgängiger Ausführung des Doppelkupplungsgetriebes 1.6 ist in Fig. 6 abgebildet.

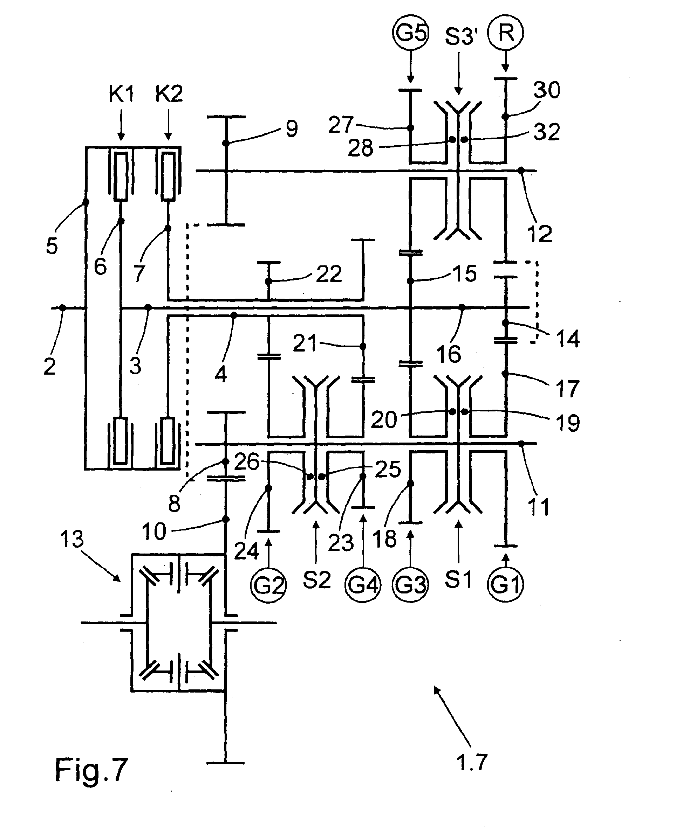

In einer von den drei vorbeschriebenen nicht erfindungsgemäßen Varianten des Doppelkupplungsgetriebes 1.4, 1.5, 1.6 gemäß Fig. 4, Fig. 5 und Fig. 6 stärker abweichenden nicht erfindungsgemäßen vierten Variante einer fünfgängigen Ausführungsform des Doppelkupplungsgetriebes 1.7 nach Fig. 7 ist das Losrad 30 des Rückwärtsgangs R in der Radsatzebene des ersten Gangs G1 drehbar auf der zweiten Vorgelegewelle 12 gelagert. Durch einen Verzahnungseingriff mit dem Losrad 17 des ersten Gangs G1 steht das Losrad 30 des Rückwärtsgangs R über das Losrad 17 und das Festrad 14 des ersten Gangs G1 unter Umkehrung der Drehrichtung mit der ersten Eingangswelle 3 in Triebverbindung. Das Losrad 30 des Rückwärtsgangs R ist mit der zweiten Vorgelegewelle 12 über die zugeordnete Gangkupplung 32 drehfest verbindbar, wobei die Gangkupplung 32 des Rückwärtsgangs R zusammen mit der Gangkupplung 28 des fünften Gangs G5 in einem gemeinsamen Schaltpaket S3' zusammengefasst ist. Hierdurch wird nun für die Schaltbetätigung, also für das Ein- und Auslegen des fünften Gangs G5 und des Rückwärtsgangs R das um die Gangkupplung 32 des Rückwärtsgangs R erweiterte Schaltpaket S3' und die entsprechend abgeänderte Betätigungsvorrichtung genutzt, über die in der sechsgängigen Basisausführung beispielsweise nach Fig. 1 nur die Schaltbetätigung des fünften Gangs G5 erfolgt. Das dort für die Schaltbetätigung des sechsten Gangs G6 und des Rückwärtsgangs R vorgesehene Schaltpaket S4 sowie die zugeordnete Betätigungsvorrichtung wird vorliegend komplett eingespart.

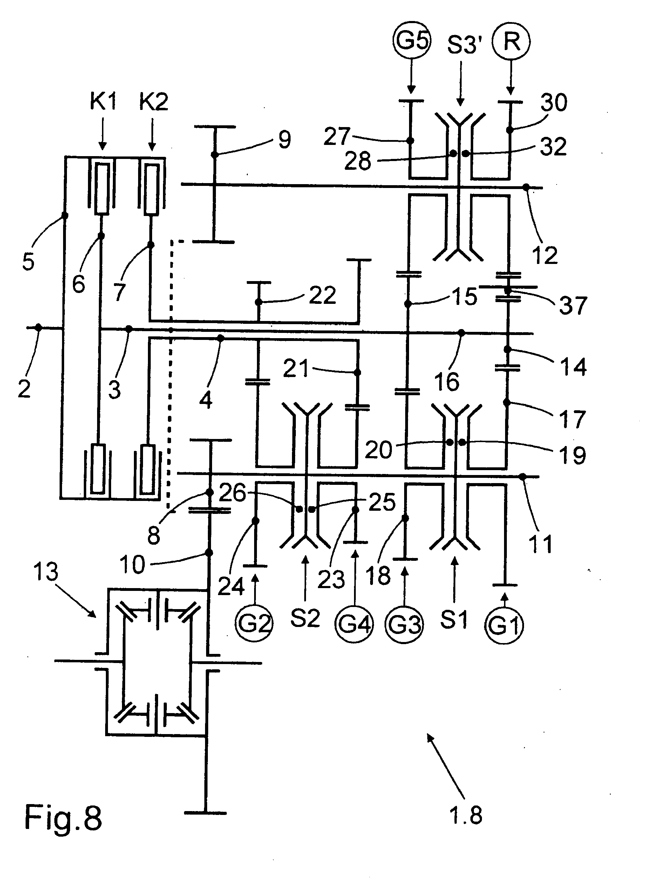

In einer von der vorbeschriebenen nicht erfindungsgemäßen Variante der fünfgängigen Ausführungsform des Doppelkupplungsgetriebes 1.7 nach Fig. 7 leicht abweichenden nicht erfindungsgemäßen fünften Variante der fünfgängigen Ausführung des Doppelkupplungsgetriebes 1.8 nach Fig. 8 ist das Losrad 30 des Rückwärtsgangs R ebenfalls in der Radsatzebene des ersten Gangs G1 angeordnet. Bei sonst gleicher Ausbildung und Anordnung steht das Losrad 30 des Rückwärtsgangs R nunmehr jedoch über ein mit diesem und mit dem Festrad 14 des ersten Gangs G1 in Verzahnungseingriff stehenden Zwischenrad 37 mit der ersten Eingangswelle 3 in Triebverbindung, wobei das Zwischenrad 37 die Drehrichtungsumkehr zwischen dem Losrad 30 des Rückwärtsgangs R und der ersten Eingangswelle 3 bewirkt.

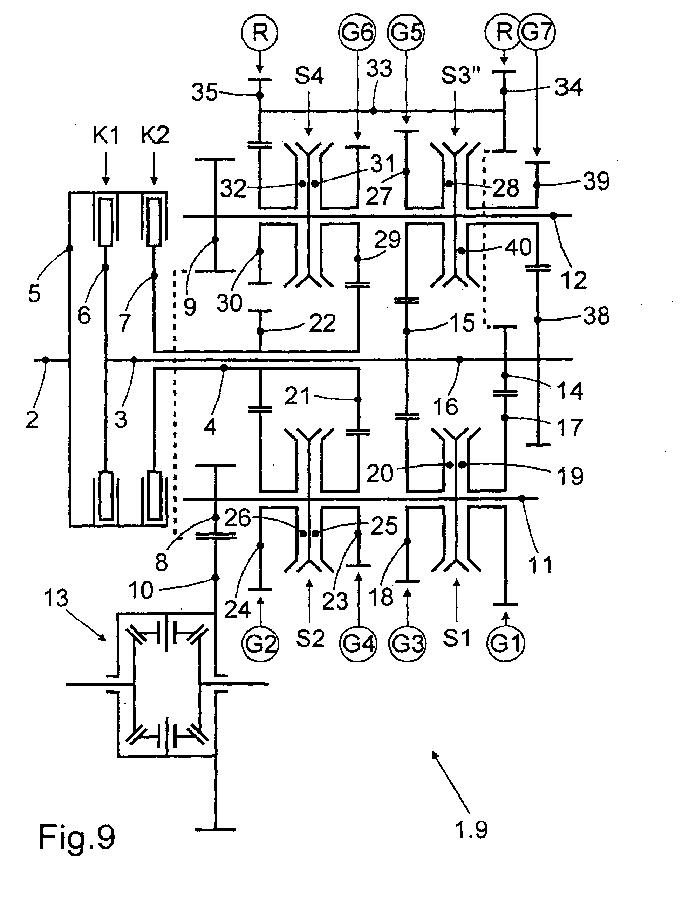

Eine aus der Basisausführung nach Fig. 1 abgeleitete erfindungsgemäße erste Variante einer siebengängigen Ausführungsform des Doppelkupplungsgetriebes 1.9 nach Fig. 9 wird durch das Hinzufügen eines zusätzlichen Gangradsatzes eines siebten Gangs G7 in einer zusätzlichen, axial antriebsfern außenliegenden Radsatzebene gebildet. Das Festrad 38 des siebten Gangs G7 ist drehfest auf der ersten Eingangswelle 3 angeordnet. Das Losrad 39 des siebten Gangs G7 ist drehbar auf der zweiten Vorgelegewelle 12 gelagert und mit dieser mittels einer mit der Gangkupplung 28 des fünften Gangs G5 in einem gemeinsamen Schaltpaket S3" zusammengefassten Gangkupplung 40 drehfest verbindbar. Um Änderungen an der Betätigungsvorrichtung zum Ein- und Auslegen des fünften Gangs G5 und des siebten Gangs G7 so gering wie möglich zu halten, entspricht die Axialposition des gemeinsamen Schaltpaketes S3" der Axialposition des einfachwirksamen Schaltpaketes S3 des fünften Gangs G5 der sechsgängigen Basisausführung z.B. gemäß Fig. 1.

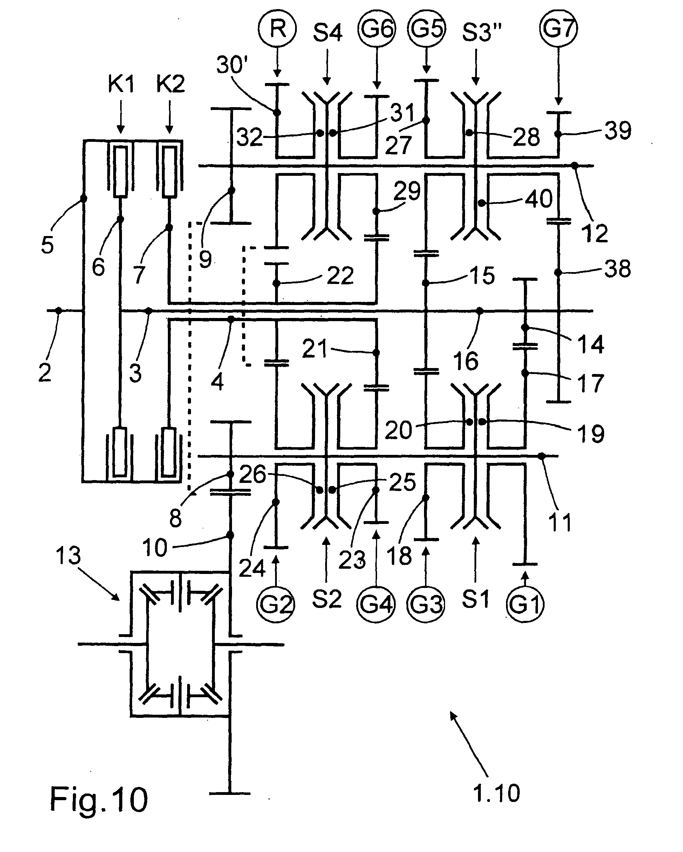

Eine dazu weitgehend identische, jedoch mit der triebtechnischen Anbindung des Rückwärtsgangs R nach Fig. 2 versehene erfindungsgemäße zweite Variante der siebengängigen Ausführung des erfindungsgemäßen Doppelkupplungsgetriebes 1.10 ist in Fig. 10 abgebildet.

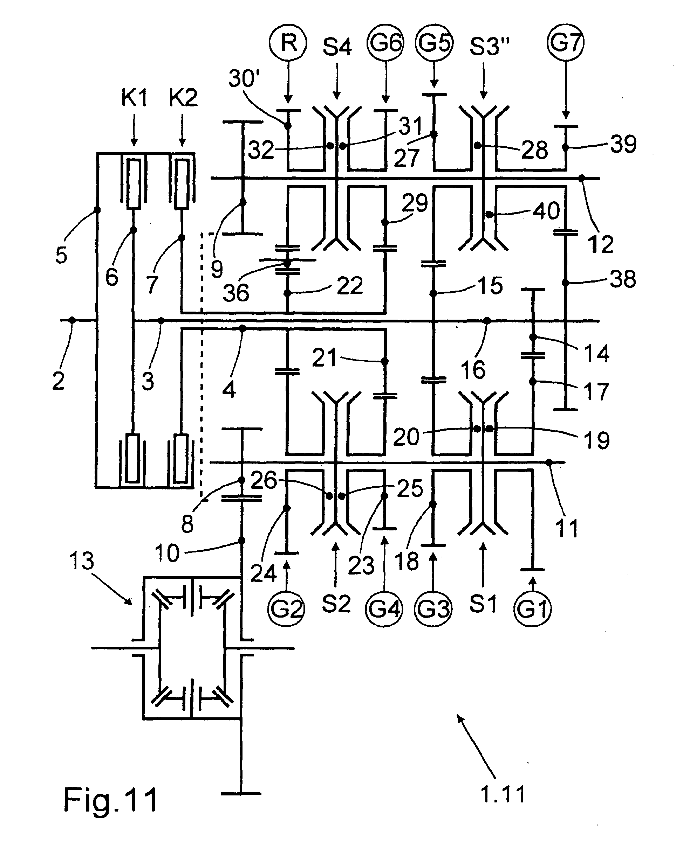

Eine dazu weitgehend identische, jedoch mit der triebtechnischen Anbindung des Rückwärtsgangs R nach Fig. 3 versehene erfindungsgemäße dritte Variante der siebengängigen Ausführung des erfindungsgemäßen Doppelkupplungsgetriebes 1.11 ist in Fig. 11 abgebildet.

### Bezugszeichen

- 1.1: Doppelkupplungsgetriebe
- 1.2: Doppelkupplungsgetriebe
- 1.3: Doppelkupplungsgetriebe
- 1.4: Doppelkupplungsgetriebe
- 1.5: Doppelkupplungsgetriebe
- 1.6: Doppelkupplungsgetriebe
- 1.7: Doppelkupplungsgetriebe
- 1.8: Doppelkupplungsgetriebe
- 1.9: Doppelkupplungsgetriebe
- 1.10: Doppelkupplungsgetriebe
- 1.11: Doppelkupplungsgetriebe
- 2: Antriebswelle
- 3: Zentrale Eingangswelle
- 4: Hohle Eingangswelle
- 5: Kupplungskorb
- 6: Abtriebsscheibe
- 7: Abtriebsscheibe
- 8: Abtriebsrad
- 9: Abtriebsrad
- 10: Abtriebselement
- 11: Vorgelegewelle
- 12: Vorgelegewelle
- 13: Achsdifferenzial
- 14: Festrad von G1
- 15: Festrad von G3
- 16: Abschnitt der zentralen Eingangswelle 3
- 17: Losrad von G1
- 18: Losrad von G3
- 19: Gangkupplung von G1
- 20: Gangkupplung von G3
- 21: Festrad von G4
- 22: Festrad von G2
- 23: Losrad von G4
- 24: Losrad von G2
- 25: Gangkupplung von G4
- 26: Gangkupplung von G2
- 27: Losrad von G5
- 28: Gangkupplung von G5
- 29: Losrad von G6
- 30: Losrad von R
- 30': Losrad von R
- 31: Gangkupplung von G6
- 32: Gangkupplung von R
- 33: Zwischenwelle
- 34: Antriebsrad
- 35: Abtriebsrad
- 36: Zwischenrad
- 37: Zwischenrad
- 38: Festrad von G7
- 39: Losrad von G7
- 40: Gangkupplung von G7

- G1 bis G7: (Vorwärts-)Gang
- K1: Kupplung
- K2: Kupplung
- R: Rückwärtsgang
- S1 bis S4: Schaltpaket
- S3': Schaltpaket
- S3": Schaltpaket
- S4': Schaltpaket

## Patentansprüche

1. Doppelkupplungsgetriebe eines Kraftfahrzeugs, mit sieben Vorwärtsgängen (G1 bis G7) und einem Rückwärtsgang (R) mit
- zwei koaxial zueinander angeordneten und über jeweils eine separate Kupplung (K1, K2) mit der Antriebswelle (2) eines Antriebsmotors verbindbaren Eingangswellen (3, 4),
- zwei achsparallel neben den Eingangswellen (3, 4) angeordneten und über jeweils ein Abtriebsrad (8, 9) mit einem gemeinsamen Abtriebselement (10) in Triebverbindung stehenden Vorgelegewellen (11, 12),
- mehreren jeweils mindestens zwei miteinander in Verzahnungseingriff stehende Zahnräder, darunter ein Festrad und ein Losrad, umfassenden Gangradsätzen, deren Festräder auf die beiden Eingangswellen (3, 4) verteilt und jeweils drehfest auf der zugeordneten Eingangswelle (3, 4) angeordnet sind, und deren Losräder auf die beiden Vorgelegewellen (11, 12) verteilt und jeweils drehbar auf der zugeordneten Vorgelegewelle (11, 12) gelagert sowie durch eine zugeordnete Gangkupplung drehfest mit dieser verbindbar sind, wobei
- die erste Eingangswelle (3) koaxial zentral innerhalb der als Hohlwelle ausgebildeten zweiten Eingangswelle (4) angeordnet ist,
- die beiden Kupplungen (K1, K2) axial antriebsseitig angeordnet und über einen gemeinsamen Kupplungskorb (5) mit der Antriebswelle (2) des Antriebsmotors verbunden sind,
- die Festräder (14, 15) des ersten Gangs (G1) und des dritten Gangs (G3) drehfest auf einem antriebsfernen Abschnitt (16) der ersten Eingangswelle (3) angeordnet sind,
- die Losräder (17, 18) des ersten Gangs (G1) und des dritten Gangs (G3) drehbar auf der ersten Vorgelegewelle (11) gelagert und mit dieser mittels zugeordneter, in einem gemeinsamen Schaltpaket (S1) zusammengefasster Gangkupplungen (19, 20) wechselweise drehfest verbindbar sind,
- die Festräder (21, 22) des vierten Gangs (G4) und des zweiten Gangs (G2) drehfest auf der zweiten Eingangswelle (4) angeordnet sind,
- die Losräder (23, 24) des vierten Gangs (G4) und des zweiten Gangs (G2) drehbar auf der ersten Vorgelegewelle (11) gelagert und mit dieser mittels zugeordneter, in einem gemeinsamen Schaltpaket (S2) zusammengefasster Gangkupplungen (25, 26) wechselweise drehfest verbindbar sind,
- das Festrad (21) des vierten Gangs (G4) zugleich das Festrad des sechsten Gangs (G6) bildet und mit dem Losrad (29) des sechsten Gangs (G6) in Verzahnungseingriff ist und
- das Festrad (38) des siebten Gangs (G7) drehfest auf der ersten, zentralen Eingangswelle (3) angeordnet ist, das Losrad (39) des siebten Gangs (G7) drehbar auf der zweiten Vorgelegewelle (12) gelagert und mit dieser mittels einer mit der Gangkupplung (28) des fünften Gangs (G5) in einem gemeinsamen Schaltpaket (S3") zusammengefassten Gangkupplung (40) drehfest verbindbar ist,
**dadurch gekennzeichnet, dass**
- jede der beiden Eingangswellen (3, 4) mindestens ein Festrad aufweist, das zwei Gangradsätzen zugeordnet und mit auf verschiedenen Vorgelegewellen (11, 12) angeordneten Losrädern in Verzahnungseingriff ist,
- das Festrad (15) des dritten Gangs (G3) zugleich das Festrad des fünften Gangs (G5) bildet und mit dem Losrad (27) des fünften Gangs (G5) in Verzahnungseingriff ist,
- das Losrad (30) des Rückwärtsgangs (R) in der Radsatzebene des zweiten Gangs (G2) angeordnet ist,
- die Losräder (29, 30) des sechsten Gangs (G6) und des Rückwärtsgangs (R) drehbar auf der zweiten Vorgelegewelle (12) gelagert so wie mit dieser mittels zugeordneter, in einem gemeinsamen Schaltpaket (S4) zusammengefasster Gangkupplungen (31, 32) wechselweise drehfest verbindbar sind, und
- der Gangradsatz des siebten Gangs (G7) in einer zusätzlichen, axial antriebsfern außenliegenden Radsatzebene gebildet ist.

## Claims

1. Double clutch gearbox of a motor vehicle, having seven forward gears (G1 to G7) and one reverse gear (R), having
- two input shafts (3, 4) which are arranged coaxially with respect to one another and can be connected by means of in each case one separate clutch (K1, K2) to the driveshaft (2) of a drive engine,
- two countershafts (11, 12) which are arranged axially parallel adjacent to the input shafts (3, 4) and are drive-connected by means of in each case one drive output wheel (8, 9) to a common drive output element (10),
- a plurality of gearwheel sets which comprise in each case at least two gearwheels, specifically a fixed wheel and a loose wheel, in meshing engagement with one another, the fixed wheels of which gearwheel sets are distributed on the two input shafts (3, 4) and are arranged in each case on the associated input shaft (3, 4) for conjoint rotation therewith, and the loose wheels of which gearwheel sets are distributed on the two countershafts (11, 12) and are mounted in each case rotatably on the associated countershaft (11, 12) and can be connected thereto for conjoint rotation therewith by means of an associated gear clutch,
- with the first input shaft (3) being arranged coaxially centrally within the second input shaft (4) which is formed as a hollow shaft,
- with the two clutches (K1, K2) being arranged axially at the drive input side and being connected by means of a common clutch cage (5) to the driveshaft (2) of the drive engine,
- with the fixed wheels (14, 15) of the first gear (G1) and of the third gear (G3) being arranged on a drive-input-remote section (16) of the first input shaft (3) for conjoint rotation therewith,
- with the loose wheels (17, 18) of the first gear (G1) and of the third gear (G3) being rotatably mounted on the first countershaft (11) and alternately connectable thereto for conjoint rotation therewith by means of associated gear clutches (19, 20) which are combined in a common shift pack (S1),
- with the fixed wheels (21, 22) of the fourth gear (G4) and of the second gear (G2) being arranged on the second input shaft (4) for conjoint rotation therewith,
- with the loose wheels (23, 24) of the fourth gear (G4) and of the second gear (G2) being rotatably mounted on the first countershaft (11) and being alternately connectable thereto for conjoint rotation therewith by means of associated gear clutches (25, 26) which are combined in a common shift pack (S2),
- with the fixed wheel (21) of the fourth gear (G4) simultaneously forming the fixed wheel of the sixth gear (G6) and being in meshing engagement with the loose wheel (29) of the sixth gear (G6), and
- with the fixed wheel (38) of the seventh gear (G7) being arranged on the first, central input shaft (3) for conjoint rotation therewith, the loose wheel (39) of the seventh gear (G7) being rotatably mounted on the second countershaft (12) and being connectable thereto for conjoint rotation therewith by means of a gear clutch (40) which is combined in a common shift pack (S3") with the gear clutch (28) of the fifth gear (G5), **characterized in that**
- each of the two input shafts (3, 4) has at least one fixed wheel which is assigned to two gearwheel sets and which is in meshing engagement with loose wheels arranged on different countershafts (11, 12),
- the fixed wheel (15) of the third gear (G3) simultaneously forms the fixed wheel of the fifth gear (G5) and is in meshing engagement with the loose wheel (27) of the fifth gear (G5),
- the loose wheel (30) of the reverse gear (R) is arranged in the wheel set plane of the second gear (G2),
- the loose wheels (29, 30) of the sixth gear (G6) and of the reverse gear (R) are rotatably mounted on the second countershaft (12) and are alternately connectable thereto for conjoint rotation therewith by means of associated gear clutches (31, 32) which are combined in a common shift pack (S4), and
- the gearwheel set of the seventh gear (G7) is formed in an additional, outer wheel set plane axially remote from the drive input.

## Revendications

1. Transmission à double embrayage pour un véhicule automobile, comprenant sept vitesses de marche avant (G1 à G7) et une vitesse de marche arrière (R), avec
- deux arbres d'entrée (3, 4) disposés coaxialement l'un par rapport à l'autre et pouvant être connectés par le biais d'un embrayage séparé respectif (K1, K2) à l'arbre d'entraînement (2) d'un moteur d'entraînement,
- deux arbres intermédiaires (11, 12) disposés avec leurs axes parallèles à côté des arbres d'entrée (3, 4) et en liaison d'entraînement par le biais d'une roue de prise de force respective (8, 9) avec un élément de prise de force commun (10),
- plusieurs jeux de pignons de vitesse comprenant à chaque fois au moins deux roues dentées en prise d'engrènement l'une avec l'autre, dont une roue fixe et une roue libre, dont les roues fixes sont disposées de manière répartie sur les deux arbres d'entrée (3, 4) et à chaque fois de manière solidaire en rotation sur l'arbre d'entrée associé (3, 4), et dont les roues libres sont montées de manière répartie sur les deux arbres intermédiaires (11, 12) et à chaque fois de manière rotative sur l'arbre intermédiaire associé (11, 12), et peuvent être connectées à celui-ci de manière solidaire en rotation par un embrayage associé,
- le premier arbre d'entrée (3) étant disposé coaxialement à l'intérieur du deuxième arbre d'entrée (4) réalisé sous forme d'arbre creux,
- les deux embrayages (K1, K2) étant disposés axialement du côté de l'entraînement et étant connectés par le biais d'une cloche d'embrayage commune (5) à l'arbre d'entraînement (2) du moteur d'entraînement,
- les roues fixes (14, 15) de la première vitesse (G1) et de la troisième vitesse (G3) étant disposées de manière solidaire en rotation sur une portion (16) éloignée de l'entraînement du premier arbre d'entrée (3),
- les roues libres (17, 18) de la première vitesse (G1) et de la troisième vitesse (G3) étant montées de manière rotative sur le premier arbre intermédiaire (11) et pouvant être connectées à celui-ci de manière solidaire en rotation en alternance au moyen d'embrayages (19, 20) associés à celui-ci et rassemblés en un groupe de changement de vitesse commun (S1),
- les roues fixes (21, 22) de la quatrième vitesse (G4) et de la deuxième vitesse (G2) étant disposées de manière solidaire en rotation sur le deuxième arbre d'entrée (4),
- les roues libres (23, 24) de la quatrième vitesse (G4) et de la deuxième vitesse (G2) étant montées de manière rotative sur le premier arbre intermédiaire (11) et pouvant être connectées à celui-ci de manière solidaire en rotation en alternance au moyen d'embrayages (25, 26) associés à celui-ci et rassemblés en un groupe de changement de vitesse commun (S2),
- la roue fixe (21) de la quatrième vitesse (G4) formant en même temps la roue fixe de la sixième vitesse (G6) et étant en prise d'engrènement avec la roue libre (29) de la sixième vitesse (G6), et
- la roue fixe (38) de la septième vitesse (G7) étant disposée de manière solidaire en rotation sur le premier arbre d'entrée central (3), la roue libre (39) de la septième vitesse (G7) étant montée de manière rotative sur le deuxième arbre intermédiaire (12) et pouvant être connectée à celui-ci de manière solidaire en rotation au moyen d'un embrayage (40) rassemblé avec l'embrayage (28) de la cinquième vitesse (G5) pour former un groupe de changement de vitesse commun (S3"), **caractérisée en ce que**
- chacun des deux arbres d'entrée (3, 4) présente au moins une roue fixe, qui est associée à deux jeux de pignons de vitesse et qui est en prise d'engrènement avec des roues libres disposées sur différents arbres intermédiaires (11, 12),
- la roue fixe (15) de la troisième vitesse (G3) formant en même temps la roue fixe de la cinquième vitesse (G5) et étant en prise d'engrènement avec la roue libre (27) de la cinquième vitesse (G5),
- la roue libre (30) de la vitesse de marche arrière (R) étant disposée dans le plan du jeu de roues de la deuxième vitesse (G2),
- les roues libres (29, 30) de la sixième vitesse (G6) et de la vitesse de marche arrière (R) sont montées de manière rotative sur le deuxième arbre intermédiaire (12) et peuvent être connectées de manière solidaire en rotation en alternance à celui-ci au moyen d'embrayages (31, 32) associés à celui-ci, rassemblés en un groupe de changement de vitesse commun (S4), et
- le jeu de pignons de vitesse de la septième vitesse (G7) est formé dans un plan de jeu de roues supplémentaire, situé axialement à l'extérieur à l'écart de l'entraînement.
